# EUROPÄISCHE PATENTSCHRIFT

(11) **EP 1 360 061 B1**
(45) Veröffentlichungstag und Bekanntmachung des Hinweises auf die Patenterteilung: **07.12.2005**
(21) Anmeldenummer: 02712769.5
(22) Anmeldetag: 12.02.2002
(51) Int. Cl.: B29C 47/70, B29C 47/06, B29C 47/12

(54) **VORRICHTUNG ZUR HERSTELLUNG VON KUNSTSTOFFROHREN**
DEVICE FOR PRODUCING PLASTIC PIPES
DISPOSITIF DE REALISATION DE TUBES EN PLASTIQUE

(30) Priorität: 16.02.2001 DE 10107191
(43) Veröffentlichungstag der Anmeldung: 12.11.2003
(60) Teilanmeldung: 05007210.7
(73) Patentinhaber: UNICOR GmbH, 97437 Hassfurt (DE)
(72) Erfinder: KOSSNER, Hubert, 97523 Schwanfeld (DE); PFENNIG, Dietmar, 97348 Rödelsee (DE)
(74) Vertreter: Köhler, Walter
(86) Internationale Anmeldenummer: PCT/DE2002/000493
(87) Internationale Veröffentlichungsnummer: WO 2002/066229

(56) Entgegenhaltungen:
- DE-A- 19 835 189
- FR-A- 2 180 570
- US-A- 3 809 515
- US-A- 5 690 972
- US-A- 6 116 885

## Beschreibung

Die Erfindung betrifft eine Vorrichtung zur Herstellung von nahtlosen Kunststoffrohren;
mit mindestens einer Extrusionseinrichtung;
mit mindestens einem der Extrusionsrichtung in Produktionsrichtung nachgeschaltetem Spritzkopf mit mindestens einem Ringspalt;
mit mindestens einem dem Spritzkopf in Produktionsrichtung nachgeschaltetem Formhohlraum zur Ausformung des Kunststoffrohrs aus mindestens einem aus dem Ringspalt des Spritzkopfs austretendem Kunststoffschmelzestrom;
wobei vorgesehen ist:
daß der Spritzkopf eine Verteileinrichtung aufweist, die eine Eintrittsöffnung aufweist, in die ein Zuführkanal der Kunststoffschmelze mündet;
wobei die Verteileinrichtung mehrere von der Eintrittsöffnung ausgehende, im wesentlichen senkrecht zur Achse des Formhohlraums und/oder des Ringspalts verlaufende Verteilkanäle aufweist,
wobei jeder Verteilkanal einen radialen Kanalabschnitt, der von der Eintrittsstelle ausgeht, aufweist;
wobei die insgesamt n Enden der Verteilkanäle im Bereich des Umfangs der Verteileinrichtung in den Ringspalt mit jeweils gleichem Winkelabstand benachbarter Enden unter einem Winkel von 360°/n einmünden unter Ausbildung von n Fließwegen, die sich jeweils ausgehend von der Eintrittsöffnung in einander anschließenden Kanalabschnitten der Verteilkanäle zur Einmündung in den Ringspalt erstrecken und jeweils gleich großen Volumenstrom in den Ringspalt einleiten.

Derartige Vorrichtungen mit einem Spritzkopf mit einer Verteileinrichtung mit senkrecht zur Achse des Formhohlraums verlaufenden Verteilkanälen haben den Vorteil, daß der Spritzkopf einerseits mit kurzer Baulänge und andererseits auch mit geringem Durchmesser ausgebildet werden kann, so daß die Verteileinrichtung, vorzugsweise als Platte ausgebildet, innerhalb des Querschnitts des Formhohlraums angeordnet werden kann. Aufgrund der geringen Spritzkopfbaulänge kann der Zuführkanal für die Schmelze über einen Großteil seiner Länge mit relativ großem Durchmesser ausgebildet sein, so daß mit vergleichsweise niedrigen Drücken gearbeitet werden kann, trotzdem aber ausreichend Schmelze dem Ringspalt bzw. den in Produktionsrichtung hintereinander geschalteten Ringspalten zugeführt wird.

Eine Vorrichtung der eingangs genannten Art mit Spritzkopf ist aus der US 3 809 515 bekannt. Der Spritzkopf ist zwar nicht als Plattenspritzkopf ausgebildet, er weist jedoch bereits senkrecht zur Mittelachse verlaufende Verteilkanäle auf. Die Verteilkanäle sind radial gerichtet mit bogenförmigen Endabschnitten, die in Art eines Wendelverteilers in den äußeren Ringspalt einmünden. Die Variierbarkeit des Verteilungsgrads ist einerseits durch die radiale Ausrichtung der Kanäle und andererseits durch die Gestaltung des daran anschließenden Wendelverteilers begrenzt. Eine wesentliche Begrenzung ergibt sich auch daraus, daß nach dem Konzept der US 3 809 515 die Fließwege in den Verteilkanälen exakt gleich lang sein müssen, um einen homogenen Volumenstrom zu gewährleisten.

Bei einem aus US 3 743 456 bekannten Spritzkopf, der ebenfalls nicht als Plattenspritzkopf ausgebildet ist, sind bereits gleichfalls senkrecht zur Mittelachse verlaufende Verteilkanäle vorgesehen. Diese sind in Art eines Kreuzes angeordnet und münden unmittelbar in den äußeren Ringspalt. Auch in diesem Falle ist der Grad der Verteilung begrenzt, da nur eine begrenzte Anzahl ausschließlich radialer Kanäle in dem Querschnitt konstruktiv möglich sind.

Aus der DE 198 35 189 A1 ist eine Vorrichtung mit als Platte ausgebildetem Spritzkopf bekannt. Die Verteilkanäle dieses sogenannten Plattenspritzkopfs sind als stammbaumartig verzweigte Kanäle ausgebildet. Zur Ausbildung dieser Kanäle sind in einer Verteilplatte entsprechende Nuten ausgebildet, die über eine Deckplatte abgedeckt sind. Nachteil aufgrund der stammbaumartig verzweigten Verteilkanäle ist, daß die Variierbarkeit der Anzahl der Verteilkanäle bzw. die Variabilität des Verzweigungsgrads der Verteilkanäle auf Stufen, die Potenzen von 2 bilden, begrenzt ist und also eine stufenlose Variation nicht möglich ist. Eine weitere grundsätzliche konstruktive Begrenzung ergibt sich daraus, daß die Verteilkanäle nach dem Konzept der DE 198 35 189 jeweils exakt gleich lang ausgebildet sein müssen, um gleiche Fließwege sicher zu stellen, um schließlich eine homogene Zusammensetzung des am Ringspalts austretenden Kunststoffstrangs zu gewährleisten.

Ferner ist aus der DE 27 52 932 eine Vorrichtung mit Plattenspritzkopf bekannt. Bei dieser Vorrichtung weist der Plattenspritzkopf eine Verteilplatte mit im wesentlichen sternförmig angeordneten radialen Nuten auf, die über eine Deckplatte abgedeckt sternförmig radiale Verteilkanäle bilden. Die Kunststoffschmelze wird über einen zur Mittelachse des Formhohlraums konzentrischen Ringspalt dieser Verteilplatte zugeführt. Über die sternförmigen Verteilkanäle wird die Schmelze dem am äußeren Umfang der Verteilplatte angeordneten Ringspalt mit darin integriertem Wendelverteiler zugeführt. Um eine verbesserte Verteilung zu erhalten, ist bei dem in der DE 27 52 932 dargestellten Ausführungsbeispiel vorgesehen, daß die vom inneren Ringspalt ausgehenden sternförmigen Verteilkanäle in einen ringförmigen Verteilkanal münden, von dem aus weitere radiale Verteilkanäle erhöhter Anzahl strahlenförmig ausgehen. Mit dieser ringförmigen Verteilkanal ist eine homogene störungsfreie Verteilung nicht gewährleistet. Ferner ergeben sich Nachteile daraus, daß ausschließlich in der zentralen Achse innerhalb des Zuführungsringspalts in konzentrischer Anordnung Raum für die Zuleitung der Schmelze und für eventuelle Versorgungsleitungen vorhanden sein muß. Nachteil ist auch, daß zur Gewährleistung jeweils gleich langer Fließwege die gesamte Anordnung streng symmetrisch mit jeweils gleich langen Kanalabschnitten um die Mittelachse ausgebildet sein muß.

Der Erfindung liegt die Aufgabe zugrunde, eine Vorrichtung der eingangs genannten Art so weiter zu bilden, daß eine möglichst homogene Zusammensetzung des am Ringspalts des Spritzkopfs austretenden Kunststoffschmelzestrahls erhalten wird.

Die Erfindung löst diese Aufgabe mit dem Gegenstand des Anspruchs 1.

In der Verteileinrichtung des Spritzkopfs ist eine Mehrzahl von Verteilkanälen vorgesehen, in denen sich je nach ihrem Verzweigungsgrad eine bestimmte Zahl von Fließwegen für die Kunststoffschmelze ergibt, wobei sich jeder Fließweg von der Eintrittsöffnung in den Verteiler bis zu der Einmündung der Verteilkanäle in den Ringspalt erstreckt. Bei einem verzweigten Kanal ergibt sich eine der Zahl der Zweigkanäle entsprechende Zahl n von Fließwegen. Wesentlich bei der Lösung gemäß Anspruch 1 ist, daß die konstruktive Anordnung und Ausgestaltung der Verzweigkanäle ausgehend von einer gemeinsamen Eintrittsöffnung relativ frei gestaltet werden kann. Es ist möglich, diese Gestaltung optimal an das Platzangebot und die räumlichen Verhältnisse im Verteiler anzupassen, ohne daß darauf geachtet werden muß, daß sämtliche Fließwege die gleiche Länge haben. Um trotz unterschiedlich langer Fließwege zu gewährleisten, daß über die am Ringspalt einmündenden Enden der Verteilkanäle jeweils gleicher Volumenstrom dem Ringspalt zugeführt wird, ist vorgesehen, daß der Strömungswiderstand in den für die einzelnen Fließwege durchströmten Verteilkanäte, d.h. der Strömungswiderstand der nacheinander durchströmten Kanalabschnitte der jeweiligen Verteilkanäle bei unterschiedlichen Fließwegen entsprechend unterschiedlich ausgestaltet wird. Hierzu können die Innendurchmesser der bei den verschiedenen Fließwegen durchströmten Kanalabschnitte abhängig von der Länge des jeweiligen Fließwegs unterschiedlich ausgestaltet werden.

Damit ist es möglich, den Verzweigungsgrad der Verteilkanäle beliebig zu wählen. Jeder Verteilkanal kann eine oder mehrere Verzweigungsstellen aufweisen, von denen jeweils zwei oder mehr Zweigkanäle ausgehen. Hierbei können die Verteilkanäle hinsichtlich ihres Verzweigungsgrads und hinsichtlich der Länge der Kanalabschnitte unterschiedlich ausgebildet werden und die einzelnen Fließwege von der Eintrittsöffnung bis hin zur Einmündung in den Ringspalt können unterschiedliche Länge haben. Die einzelnen Kanalabschnitte können beliebige Kurvform aufweisen, sind aber vorzugsweise aus Fertigungsgründen als gerade Kanalabschnitte ausgebildet. Vorzugsweise können die Endabschnitte der Verteilkanäle vor ihrer Einmündung in den Ringspalt in bogenförmige, vorzugsweise kreisbogenförmige Kanalabschnitte übergehen, die in Art eines Wendelverteilers angeordnet sein können und die Kunststoffschmelze in den Ringspalt einleiten.

Bei bevorzugten Ausführungsformen ist die Eintrittsöffnung in den Verteiler koaxial zur Achse des Formhohlraums bzw. zur Achse des vorzugsweise kreisringförmigen Ringspalts. Die Eintrittsöffnung in die Verteileinrichtung kann jedoch auch außermittig angeordnet sein und es können auch mehrere Eintrittsöffnungen, vorzugsweise in einer gemeinsamen Ebene in der Verteileinrichtung angeordnet sein.

Die Lösung gemäß Patentanspruch 3 sieht ebenfalls eine Mehrzahl von Verteilkanälen vor, die sich jeweils in mindestens einer Verzweigungsstelle unter Ausbildung von jeweils zwei Zweigkanalabschnitten verzweigen. Die Anordnung der Verteilkanäle ist sternförmig von der mittigen Eintrittsöffnung in der Verteileinrichtung. Wesentlich ist, daß die radial von der Eintrittsöffnung ausgehenden ersten Kanalabschnitte der Verteilkanäle jeweils gerade ausgebildet sind und diese geraden radialen ersten Kanalabschnitte an ihrem Ende jeweils eine Verzweigungsstelle aufweisen, in der sie sich in mindestens zwei Zweigkanalabschnitte verzweigen. Die Anordnung ist insoweit symmetrisch sternförmig ausgehend von der Eintrittsöffnung. Die Verteilkanäle gehen ggf. nach wiederholter weiterer Verzweigung schließlich in bogenförmige, vorzugsweise kreisbogenförmige Endabschnitte über, die in Art eines Wendelverteilers die Kunststoffschmelze dem Ringspalt zuführen. Soweit die Verzweigungsstellen in den sternförmig angeordneten Verteilkanälen auf einer konzentrischen Linie um die Eintrittsöffnung angeordnet sind und in den Verzweigungsstellen eine Verzweigung in mehr als zwei Zweigkanäle erfolgt, ergeben sich für die Fließwege durch die Zweigkanäle eines Verteilkanals unterschiedliche Länge, bei Ausführungen, bei denen die Zweigkanäle auf einer konzentrischen Linie in zum Ringspalt führende gleich lange Endabschnitte münden. Dies ist der Fall, wenn die Zweigkanäle unmittelbar in die bogenförmigen Kanalabschnitte des Wendelverteilers übergehen. Ein Ausgleich dieser unterschiedlich langen Fließwege kann bei speziellen Ausführungen dadurch erfolgen, daß die anschließenden Kanalabschnitte zur Kompensation einen jeweils entsprechenden längeren oder kürzeren Fließweg aufweisen. Auf diese Weise kann erreicht werden, daß der gesamte Fließweg der einander anschließenden Kanalabschnitte zwischen der Eintrittsöffnung und der Einmündung in den Ringspalt jeweils gleich lang ist. Bei anderen Ausführungsbeispielen kann die Kompensation der unterschiedlich langen Fließwege dadurch erfolgen, daß in den Kanalabschnitten, die im Verlauf der verschiedenen Fließwege durchströmt werden, der Strömungswiderstand entsprechend unterschiedlich ausgestaltet wird, so daß schließlich trotz unterschiedlich langer Fließwege jeweils in der Einmündung in den Ringspalt der gleiche Volumenstrom dem Ringspalt zugeführt wird.

Bei bevorzugten Ausführungsbeispielen verzweigt sich der radiale erste Kanalabschnitt an der Verzweigungsstelle in mehr als zwei Zweigkanalabschnitte, vorzugsweise in drei Kanalabschnitte. Die Kanalabschnitte sind vorzugsweise als gerade Kanalabschnitte ausgebildet und symmetrisch zur Achse des radialen ersten Kanalabschnitts angeordnet. Vorzugsweise ist der mittlere von drei Zweigkanalabschnitten in gerader Linie fluchtend mit dem radialen ersten Kanalabschnitt angeordnet. Aufgrund der jeweils geraden Ausbildung der Kanalabschnitte und der Verzweigung in einer Mehrzahl von Zweigkanalabschnitten ergibt sich ein hoher Verteilungsgrad. Dies gilt insbesondere für Ausführungen, bei denen sämtliche von der Eintrittsöffnung ausgehenden Verteilkanäle in dieser gleichen Weise ausgestaltet sind und insoweit eine Symmetrie, vorzugsweise Sternstruktur, vorliegt.

Eine besonders kompakte Anordnung wird mit Ausführungen enthalten, bei denen vorgesehen ist, daß die Verteileinrichtung eine Verteilplatte aufweist, in der die radialen ersten Kanalabschnitte als vorzugsweise parallel zur Plattenebene verlaufende Bohrungen ausgebildet sind. Auch die Zweigkanalabschnitte können als parallel zur Plattenebene verlaufende Bohrungen ausgebildet sein. Dies bedeutet, daß die Verteilkanäle in diesen Abschnitten jeweils durch parallel zur Plattenebene verlaufende Bohrungen ausgebildet sind. Alternativ können die Bohrungen auch als Nuten ausgebildet sein, die durch eine oder mehrere aufliegende Deckplatten zu entsprechende Kanäle ausgebildet werden.

Bei bevorzugten Weiterbildungen kann die Verteileinrichtung eine erste Verteilplatte und eine weitere Verteilplatte aufweisen, wobei in dieser weiteren Verteilplatte Abschnitte der Verteilkanäle und zwar vorzugsweise die bogenförmigen Kanalabschnitte angeordnet sind. Diese weitere Verteilplatte kann bei konstruktiv besonders einfachen Ausführungen als ringförmige Verteilplatte ausgebildet sein. In dieser ringförmigen Verteilplatte können die bogenförmigen Kanalabschnitte angeordnet sein. Die Eintrittsöffnung und der radialen ersten Kanalabschnitte und vorzugsweise auch die Zweigkanalabschnitte können in einer zentralen Verteilplatte angeordnet sein, die von der ringförmigen Verteilplatte umgeben angeordnet ist. Eine besonders kompakte Anordnung ergibt sich, wenn die zentrale Verteilplatte und/oder die ringförmige Verteilplatte eine konzentrische Abstufung aufweist bzw. aufweisen und die beiden Platten komplementär hinsichtlich der Abstufung aufeinanderliegend angeordnet sind. In diesem Falle kann der äußere ringförmige Stufenrand der zentralen Platte die außen angeordnete ringförmige Verteilplatte übergreifenund auf dieser aufliegen. Zur Ausbildung der bogenförmigen Kanalabschnitte können in der äußeren ringförmigen Verteilscheibe bogenförmige Nuten ausgebildet sein, die von dem ringförmigen Stufenrand der zentralen Platte abgedeckt werden, so daß die bogenförmigen Kanalabschnitte ausgebildet werden.

Besonders kompakte Ausführungen mit Spritzköpfen mit mehreren in Produktionsrichtung hintereinander angeordneten Verteileinrichtungen wird bei der mittigen Anordnung der Eintrittsöffnung in der Verteileinrichtung erhalten, wenn die Verteileinrichtung erhalten, wenn die Verteileinrichtung außermittig einen Durchlaß für einen Zufuhrkanal für Kunststoffschmelze einer in Produktionsrichtung nachgeschalteten Verteileinrichtung aufweist. Außerdem kann die Verteileinrichtung auch noch außermittig einen Durchlaß für Versorgungseinrichtungen, z.B. Leitung für Luft, Strom, Kühlmittel usw. aufweisen.

Weitere Merkmale, Einzelheiten und Vorteile der Erfindung ergeben sich aus der folgenden Beschreibung eines Ausführungsbeispieles einer Vorrichtung zur Herstellung von zweiwandigen Wellrohren anhand der Zeichnung.

Es zeigen:
- Fig. 1: schematisch und im Längsschnitt den Bereich einer Vorrichtung zur Herstellung doppelwandiger Wellrohre, in dem die Kunststoff-Schmelze aus Verteileinrichtungen austritt und in Korrugator-Formbacken zu einem Wellrohr geformt wird;
- Fig. 2: eine Draufsicht auf den stromab liegenden Teil einer Verteileinrichtung entsprechend II-II in Fig. 1;
- Fig. 3: schematisch eine Vorrichtung zur Herstellung eines doppelwandigen Wellrohres unter Benutzung zweier Extruder, und
- Fig. 4 und 5: schematisch zwei unterschiedliche Anordnungen zur Herstellung doppelwandiger Wellrohre ausgehend von einem Extruder.

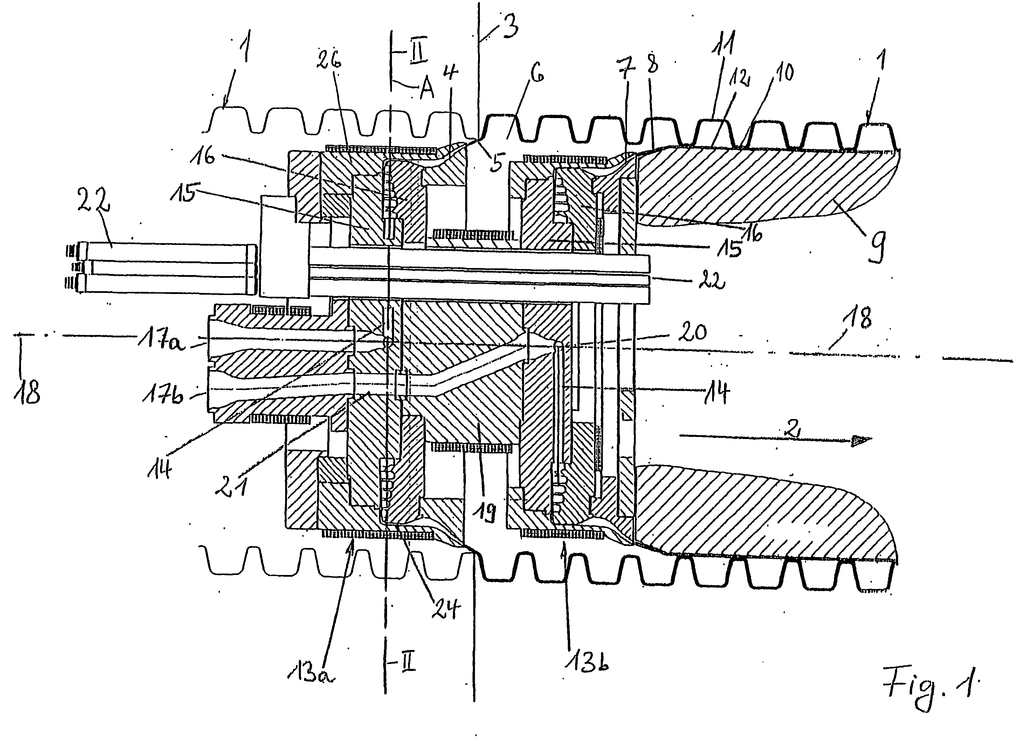

In Fig. 1 ist schematisch bei 1 die entsprechend gewellte Innenwand eines Korrugator-Formbackens gezeigt, wobei in Fertigungsrichtung 2 des Wellrohres mehrere entsprechende Formbacken unmittelbar aufeinanderfolgen. Die Anlagefläche zweier Formbacken ist durch die Linie 3 in Fig. 1 angedeutet.

Die Herstellung des mehrwandigen Wellrohres erfolgt in an sich bekannter Weise derart, daß ein erster, aus einem Ringspalt 4 austretender, rohrförmiger Strom 5 von Kunststoff-Schmelze durch geeignete Mittel, z.B. in dem Raum 6 aufgebrachten Überdruck, gegen die Innenwand 1 des entsprechenden, sich in Fertigungsrichtung 2 gleichmäßig bewegenden Formbackens angelegt wird. Auf den Ringspalt 4 folgt in Fertigungsrichtung 2 dann ein weiterer Ringspalt 7, aus dem ebenfalls ein rohrförmiger Strom 8 einer Kunststoff-Schmelze austritt. Dieses Kunststoff-Schmelze-Rohr wird durch einen Dom 9, dessen genaue Ausbildung vom jeweils verwendeten Kunststoff und der speziellen Rohrform etc. abhängig und deswegen nicht näher erläutert ist, gegen die Bereiche 10 der Außenwand 11 des zu bildenden Wellrohres angedrückt, wobei die Temperatur während des Andrückens des inneren Rohres 8 des Wellrohres gegen die Außenwand 11 so gewählt wird, daß in den Bereichen 10 eine Verschweißung von Außenwand 11 und Innenwand 12 erfolgt und so ein entsprechendes Wellrohr mit gerippter Außenwand 11 und glatter Innenwand 12 entsteht. Hinsichtlich der Bildung des Wellrohres selbst entspricht die in Fig. 1 skizzierte Vorrichtung vollständig dem Stand der Technik.

Der wesentliche Unterschied zwischen der Vorrichtung gemäß Fig. 1 und dem Stand der Technik ist in der Art zu sehen, wie die Kunststoff-Schmelze den Ringspalten 4 und 7 zugeführt wird.

Aus Fig. 1 ist ersichtlich, daß zu diesem Zweck zwei insgesamt mit 13a bzw. 13b bezeichnete Verteileinrichtung vorgesehen sind. Diese beiden Verteileinrichtungen sind grundsätzlich gleich aufgebaut. Allerdings ist der Durchmesser des Ringschlitzes 4 für die Außenwand 11 im gezeigten Ausführungsbeispiel etwas größer als der Durchmesser des Ringschlitzes 7 für die Innenwand 12 und entsprechend sind auch die Durchmesser der Verteileinrichtungen 13a und 13b etwas unterschiedlich. Dies ist deswegen erforderlich, um zu verhindem, daß die bereits an der Innenwand 1 der Formbacken anliegende Außenwand 11 des Kunststoff-Wellrohres mit der Verteileinrichtung 13b in Berührung kommt.

Jede der Verteileinrichtungen 13a und 13b umfaßt zwei plattenförmige, im äußeren Grundriß jeweils kreisförmige Elemente, nämlich eine scheibenförmige erste Platte 15, die als Abschnitte von Verteilkanälen 14 dienende innerhalb der Platte 15 parallel zur Plattenebene ausgebildete Bohrungen aufweist, sowie eine im Grundriß kreisringförmige zweite Platte 16, die nutenförmige Aussparungen aufweist, die von der im Bereich der nutenförmigen Aussparungen aufliegenden scheibenförmigen Platte 15 abgedeckt werden und damit an die in der Platte 15 ausgebildeten Bohrungen anschließen und so die Verteilkanäle 14 vervollständigen. Die im Grundriß kreisförmige Umfangsfläche 24 der ersten Platte 15 wird in geringem Abstand und unter Ausbildung eines Ringspalts 25 von einem Außenring 26 umgeben, dessen Querschnitt aus Fig. 1 ersichtlich ist.

Die beiden Verteileinrichtungen 13a, 13b sind somit aus den platten- bzw. ringförmigen Elementen 15, 16, 26 zusammengesetzt und weisen jeweils insgesamt eine flache grundsätzlich plattenförmige Ausgestaltung auf.

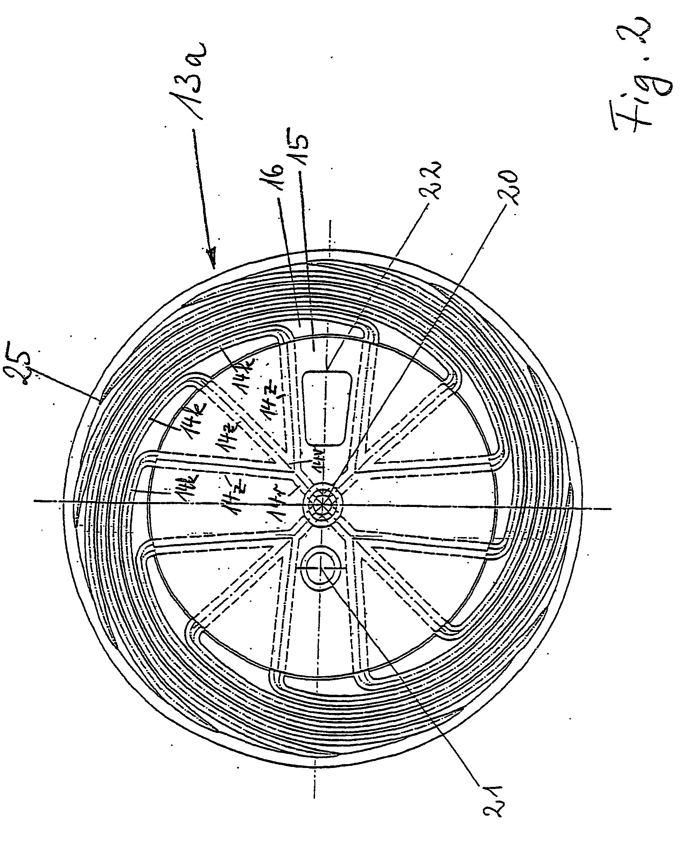

Die Zuführung der Kunststoffschmelze vom Extruder zu den Verteileinrichtungen 13a, 13b erfolgt über im wesentlichen in Fertigungsrichtung 2 verlaufende Zufuhrkanäle 17a, 17b, die in der Mittelachse 18 des von den Korrugatorformbacken gebildeten Formhohlraums verlaufen und vergleichsweise großen Querschnitt aufweisen können. Diese Zufuhrkanäle 17a, 17b enden jeweils in einer Eintrittsöffnung 20 der entsprechenden Verteileinrichtung 13a, 13b, von der dann die Verteilkanäle (siehe Fig. 2) ausgehen.

Während der Zufuhrkanal 17a im Zentrum der ersten Verteileinrichtung 13a (für die Außenwand 11) endet, durchsetzt der zweite Zufuhrkanal 17b die erste Verteileinrichtung 13a außermittig in Form einer in der Platte 15 ausgebildeten Bohrung 21. Die Bohrung 21 durchsetzt die Platte 15 außermittig mit Abstand zu Eintrittsöffnung 20, ist jedoch in dem zentralen Bereich der Platte 15 angeordnet ist, der von der ringförmigen Platte 16 nicht abgedeckt ist. Die Bohrung 21 ist damit im Querschnittsbereich der zentralen Aussparung dieser ringförmigen Platte 16 angeordnet. Daher erübrigt sich die Ausbildung einer separaten fluchtenden Bohrung in dieser ringförmigen Platte 16.

Der auf diese Weise die Verteileinrichtung 13a außermittig durchsetzende Zufuhrkanal 17b verläuft in dem Distanzblock 19, der zwischen der Verteileinrichtung 13a und der in Produktionsrichtung nachgeschalteten Verteileinrichtung 13b angeordnet ist. Der Zuführkanal 17b weist in seinem Verlauf durch den Distanzblock 19 einen zur Mittelachse schräg gerichteten Abschnitt auf und mündet schließlich in einen in der Mittelachse 18 angeordneten Endabschnitt in die zentrale Eintrittsöffnung 20 der Verteileinrichtung 13b ein.

Außerhalb der zentralen Mittelachse 18 ist in den beiden Verteileinrichtungen 13a und 13b jeweils ein Durchlaß 22 vorgesehen, durch den beispielsweise Versorgungsleitungen für Strom, Luft oder Wasser zum Kühl- bzw. Kalibrierdom 9 geführt werden können. Der Durchlaß 22 ist in entsprechender Position wie die Bohrung 21 außermittig mit Abstand zu Eintrittsöffnung 20 in der Verteilplatte 15 und zwar fluchtend in jeder Verteileinrichtung 13a, 13b angeordnet, so daß die Versorgungsleitungen parallel versetzt zur zentralen Mittelachse 18 geführt weden können. Der Durchlaß 22 ist jeweils in einer Bohrung in der Platte 15 mit Abstand zu der Eintrittsöffnung 20 angeordnet. Sie durchsetzt die Platte 15 in einem dem Zentrum nahem Bereich, so daß der Durchlaß 22 jeweils im Querschnittsbereich der zentralen Aussparung der ringförmigen Platte 16 angeordnet und sich eine separate Bohrung in der ringförmigen Platte 16 erübrigt.

In Fig. 2 ist ein Beispiel dafür, wie die Verteilkanäle 14 in der Verteileinrichtung 13a angeordnet sein können, schematisch dargestellt.

Die Verteilkanäle 14 sind in der Verteileinrichtung 13a in einer grundsätzlich sternförmigen Konfiguration angeordnet. Sämtliche Verteilkanäle 14 haben ihren Ursprung in der zentralen Öffnung 20 und erstrecken sich in einer senkrecht zur Mittelachse 18 liegenden Ebene A zum Umfang der Verteileinrichtung 13a hin, um schließlich in den Ringspalt 25 einzumünden. Der Ringspalt 25 ist zwischen der Umfangsfläche 24 der Platte 15 und der radialen Innenseite des Außenrings 26 ausgebildet und geht unmittelbar in die darin anschließende Düse über, an deren Austrittsende der Ringspalt 4 ausgebildet ist.

Jeder Verteilkanal 14 besteht aus einem ersten radial gerichteten geraden Kanalabschnitt 14r, der sich von der Eintrittsöffnung 20 bis zu einer Verzweigungsstelle 14v erstreckt. In der Verzweigungsstelle 14v verzweigt sich der radiale Kanalabschnitt 14r in drei ebenfalls gerade Zweigkanalabschnitte 14z, die sodann jeweils in kreisbogenförmige Kanalabschnitte 14k übergehen, die in Art einer in der Ebene A angeordneten Verteilerwendel nebeneinander angeordnet sind und jeweils an der Umfangsfläche 24 der Platte 15 enden, indem sie dort in den Ringspalt 25 münden.

Bei dem dargestellten Ausführungsbeispiel sind vier radiale Kanalabschnitte 14r vorgesehen. Sie sind kreuzweise zueinander angeordnet, wobei benachbarte Kanalabschnitte 14r jeweils in einem Winkel von 90° angeordnet sind. Die Verzweigungsstellen 14v liegen alle auf einer zur Eintrittsöffnung 20 konzentrischen Kreislinie. Dies bedeutet, daß die radialen Kanalabschnitte 14r jeweils gleich lang sind.

Bei dem dargestellten Ausführungsbeispiel gehen, wie oben bereits angesprochen, von jeder Verzweigungsstelle 14v jeweils drei Zweigkanalabschnitte 14z aus, d.h. jeder radiale Kanalabschnitt 14r geht in der Verzweigungsstelle 14v in jeweils drei gerade Zweigkanalabschnitte 14z über. Sie enden jeweils auf einer zur Eintrittsöffnung 20 konzentrischen Kreislinie, indem sie dort in die bogenförmigen Kanalabschnitte 14 K übergehen. Von den jeweils drei Zweigkanalabschnitten 14z jedes radialen Kanalabschnitts 14r verläuft der mittlere Zweigkanalabschnitt 14z radial gerichtet fluchtend mit dem radialen Kanalabschnitt 14r. Die beiden äußeren Kanalabschnitte 14z verlaufen beiderseits des mittleren Zweigkanalabschnitts 14z jeweils mit einem Winkel von 45° zu diesem gerichtet. Der mittlere Zweigkanalabschnitt 14z ist jeweils kürzer als die beiden äußeren Zweigkanalabschnitte 14z. Dies ergibt sich bei dem dargestellten Ausführungsbeispiel dadurch, daß die Enden der Zweigkanalabschnitte 14z jeweils auf der konzentrischen Kreislinie angeordnet sind, deren Mittelpunkt in der Achse der Eintrittsöffnung 20 und somit versetzt zur Verzweigungsstelle 14v liegt. Die beiden äußeren Kanalabschnitte 14z sind jeweils gleich lang aufgrund der zu dem radial gerichteten mittleren Zweigkanalabschnitt symmetrischen Anordnung. Um zu erreichen, daß jeweils an dem Ende der drei Zweigkanalabschnitte 14z ein gleich großer Volumenstrom austritt, ist der Durchmesser des kürzeren mittleren Zweigkanalabschnitts 14z jeweils kleiner ausgebildet ist als der Durchmesser der beiden längeren äußeren Kanalabschnitte 14z. Die relativen Durchmesser sind so gewählt, daß die unterschiedliche Länge und der damit verbundene unterschiedliche Fließweg der Zweigkanalabschnitte 14z kompensiert wird und somit von jedem Zweigkanalabschnitt in die bogenförmigen Kanalabschnitte 14k jeweils gleich großer Volumenstrom zugeführt wird. Zusätzlich oder alternativ zu dieser Kompensation über entsprechende Wahl der Durchmesser kann bei abgewandelten Ausführungsbeispielen auch eine entsprechende unterschiedliche Einschnürung oder Erweiterung in den Zweigkanalabschnitten 14z zur Kompensation der unterschiedlichen Länge der Kanalabschnitte vorgesehen sein. Bei weiteren abgewandelten Ausführungsbeispielen kann alternativ vorgesehen sein, daß zur Anpassung der Länge der Fließwege die Zweigkanalabschnitte 14z nicht identisch geradlinig ausgebildet sind oder vorzugsweise, daß die beiden äußeren Zweigkanalabschnitte 14z geradlinig, jedoch der mittlere Zweigkanalabschnitt 14z ungeradlinig ausgebildet ist. Ferner könnten zur Kompensation auch die bogenförmigen Kanalabschnitte 14k entsprechende Einschnürungen oder Erweiterungen aufweisen oder mit unterschiedlicher Verlängerungen oder Verkürzungen ausgebildet sein.

Um eine optimale Verteilung mit jeweils gleich großem Volumenstrom im Bereich der in den Ringkanal 25 einmündenden Enden der Verteilkanäle 14 zu erhalten, ist der Durchmesser der radialen Kanalabschnitte 14r untereinander identisch ausgebildet.

Bei dem dargestellten Ausführungsbeispiel ist der Durchmesser sämtlicher radialen Kanalabschnitte 14r jeweils identisch und über die gesamte Länge des Kanalabschnitts 14r hin konstant. Der geradlinig daran anschließende mittlere der zwei Kanalabschnitte 14z hat jeweils gleichen Durchmesser wie der Kanalabschnitt 14r, wobei der Durchmesser dieses Zweigkanalabschnitts 14z ebenfalls über die gesamte Länge hin konstant ist. Der Durchmesser der beiden seitlichen längeren Kanalabschnitte 14z ist jeweils größer als der Durchmesser des mittleren Kanalabschnitts 14z und aber ebenfalls über die gesamte Länge der seitlichen Zweigkanalabschnitte 14z konstant. Die an die Zweigkanalabschnitte 14z anschließenden bogenförmigen Kanalabschnitte 14k sind untereinander identisch ausgebildet. Ihre unrunde Querschnittsfläche entspricht hinsichtlich des Flächeninhalts der Querschnittsfläche der seitlichen Zweigkanalabschnitte 14z.

Der Flächeninhalt der Querschnittsfläche dieser bogenförmigen Kanalabschnitte 14k nimmt wie aus Fig. 1 zu erkennen ist, zur Einmündung in den Ringspalt 25 hin ab. Bei abgewandelten Ausführungen kann vorgesehen sein, daß der Durchmesser der radialen Kanalabschnitte und/oder der Durchmesser der Zweigkanalabschnitte 14z über die Länge des jeweiligen Kanalabschnitts zum Ringspalt 25 hin abnimmt. Die Abnahme kann kontinuierlich über die Länge der betreffenden Kanalabschnitte ausgebildet sein.

Während die Kanalabschnitte 14r und 14z innerhalb der ersten Verteilplatte 15 als parallel zur Plattenebene angeordnete Bohrungen ausgebildet sind, werden die bogenförmigen Kanalabschnitte 14k dadurch gebildet, daß in der ringförmigen Platte 16 auf der der Auflagefläche mit der Platte 15 zugewandten Seite bogenförmige Nuten ausgebildet sind und diese Nuten durch die in diesem Bereich aufliegende Plattenfläche der ersten Verteilplatte 15 abgedeckt sind. Die bogenförmigen Nuten sind in der Ringplatte 16 so angeordnet, daß, wenn die Platten zusammengefügt sind, die Enden, d.h. die Ausmündungen der in der ersten Platte ausgebildeten Zweigkanalabschnitte 14z jeweils darin einmünden. Die Platte 15 ist hierfür als Stufenplatte mit einem zentralen Abschnitt und einer äußeren Ringstufe ausgebildet, wobei die Enden der Zweigkanalabschnitte in der Umfangsfläche des zentralen Abschnitts münden. Die komplementär abgestufte äußere ringförmige Platte 16 weist eine innere Ringstufe und einen äußeren Ringabschnitt auf, wobei die die bogenförmigen Kanalabschnitte 14k bildenden Nuten in dem äußeren Ringabschnitt ausgebildet sind. Im zusammengefügten Zustand von Stufenplatte 15 und Ringplatte 16 werden die bogenförmigen Kanalabschnitte ausgebildet durch Auflage der äußeren Ringstufe der Platte 15 auf dennNuten des äußeren Ringabschnitts der Platte 16. Die Zweigkanalabschnitte 14z münden dabei jeweils in die bogenförmigen Kanalabschnitte 14k, die also die Verteilkanäle auf diese Weise jeweils fortsetzen. Bei der Konstruktion des dargestellten Ausführungsbeispiels sind 14 Zweigkanalabschnitte 14z und 14 bogenförmige Kanalabschnitte 14k vorgesehen

Die bogenförmige Führung der Kanalabschnitte 14k, wie sie in Fig. 2 gezeigt ist, in Verbindung mit dem entlang der Umfangsfläche 24 der ersten Platte 15 gebildeten Ringspalt 25 hat die Wirkung eines Wendelverteilers, wobei durch die gewählte Anordnung die über die Verteilkanalabschnitte 14r bis 14k strömende Kunststoffschmelze sowohl einen Drehimpuls in Umfangsrichtung als auch einen Impuls in radialer Richtung erfährt. Durch die beschriebene aus Fig. 2 im wesentlichen ersichtliche Führung der Endabschnitte 14k der Verteilkanäle 14 wird erreicht, daß sich die einzelnen, aus den Endabschnitten 14k austretenden jeweils gleich großen Kunststoff-Teilströme sehr gut vermischen und in dem Spalt 25 zwischen Umfangsfläche 24 der Platte 15 und Außenring 26 ein sehr homogener, rohrförmiger Kunststoff-Strom erzeugt wird, der dann entsprechend in den eigentlichen Austritt-Ringspalt 4 bzw. bei der Verteileinrichtung 13b in den Ringspalt 7 austritt und die jeweiligen Rohrwände 11 bzw. 12 bildet.

Die Führung der Kanal-Abschnitte 14k, wie sie in Figur 2 gezeigt ist, in Verbindung mit dem entlang der Umfangsfläche 24 der Ringplatte Platte 16 gebildeten Ringspalts 25 hat die Wirkung eines Wendelverteilers, wobei durch die gewählte Anordnung die über die Verteilkanal-Abschnitte 14r, 14z, 14k strömende Kunststoff-Schmelze sowohl einen Drehimpuls in Umfangsrichtung als auch einen Impuls in radialer Richtung erfährt. Durch die beschriebene, aus Figur 2 im wesentlichen ersichtliche Führung der Endabschnitte 14k der Verteilkanäle wird erreicht, daß sich die einzelnen, aus den Endabschnitten 14k austretenden jeweils gleich großen Kunststoff-Teilströme sehr gut vermischen und in dem Spalt 25 zwischen Umfangsfläche 24 der Platte 16 und Außenring 26 ein sehr homogener, röhrförmiger Kunststoff-Strom erzeugt wird, der dann entsprechend in den eigentlichen Austritts-Ringspalt 4 bzw. bei der Verteileinrichtung 13 in den Ringspalt 7 austritt und die jeweiligen Rohrwände 11 bzw. 12 bildet.

Aus Figur 1 ist ersichtlich, daß die Stirnflächen der Verteileinrichtungen 13a und 13b weitgehend frei bleiben. Auf diese Weise ist es möglich, sehr massive Befestigungsmittel für die Verteileinrichtungen 13a und 13b einzusetzen, wodurch eine saubere.Justierung und entsprechend stabile Halterung möglich ist. Weiterhin zeigt Fig. 1, daß der Querschnitt der Verteileinrichtungen insgesamt geringer gehalten werden kann als der Durchmesser der Ringspalte 4 bzw. 7. Auf diese Weise ist es möglich, die Ring-Verteilung des Kunststoffes insgesamt innerhalb des Querschnittes des Formhohlraumes 19 unterzubringen und auch die Halterung weit in den Formhohlraum hineinreichen zu lassen.

Es können Verteileinrichtungen entsprechend den Verteileinrichtungen 13a bzw. 13b des gezeigten Ausführungsbeispieles auch verwendet werden, wenn nur ein einschichtiges Rohr hergestellt werden soll. In diesem Fall ist dann eben nur eine einzige Verteileinrichtung erforderlich. Weiterhin können die Verteileinrichtungen selbstverständlich auch eingesetzt werden, wenn Rohre anderer Art, beispielsweise glatte, nahtlose Rohre, gefertigt werden sollen. In diesem Falle ist es auch nicht unbedingt erforderlich, wandernde Formbacken vorzusehen. Hier könnte unter Umständen mit stationärer Außenform und einem entsprechenden Kem bzw. Dom gearbeitet werden.

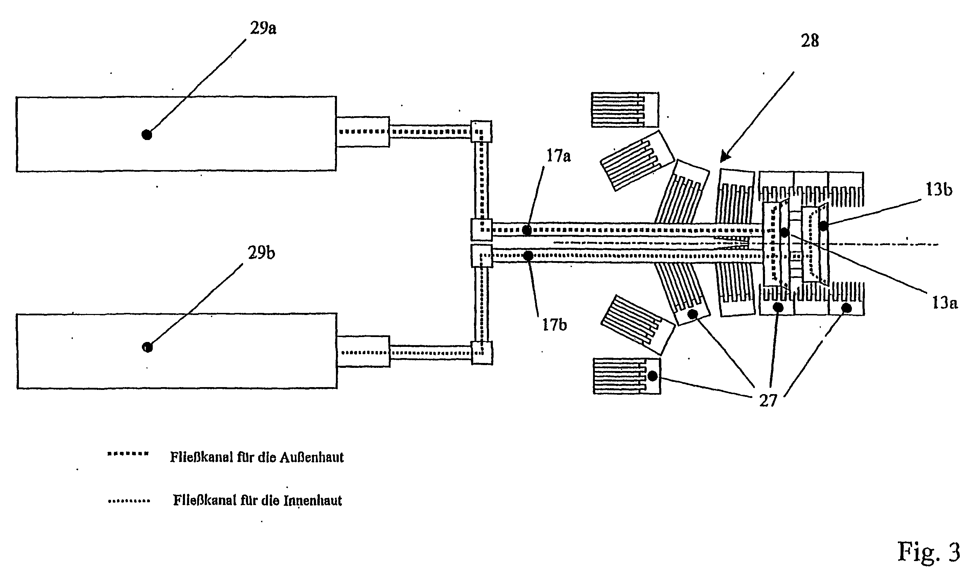

In den Fig. 3 bis 5 sind schematisch Anordnungen gezeigt, wie unter Verwendung des Erfindungsgedankens, d.h. unter Verwendung der speziellen Verteileinrichtungen, Vorrichtungen zur Herstellung von Wellrohren aufgebaut werden können.

In den Fig. 3 bis 5 ist jeweils rechts eine bewegliche, von umlaufenden Formbacken-Hälften 27 gebildete Form 28 gezeigt. In dieser beweglichen Form 28 sind - entsprechend dem Ausführungsbeispiel der Fig. 1 - zwei Verteileinrichtungen 13a, 13b angeordnet, die über Zufuhrkanäle 17a, 17b gespeist werden.

Bei dem Ausführungsbeispiel der Fig. 3 werden Innen- und Außenwand des mehrlagigen Wellrohres aus unterschiedlichen Kunststoffen erzeugt. Dementsprechend sind auch zwei Extruder, nämlich ein Extruder 29a, der die Kunststoff-Schmelze für die Außenwand 11 liefert, sowie ein Extruder 29b zur Erzeugung der Kunststoff-Schmelze für die Innenwand 12 vorgesehen.

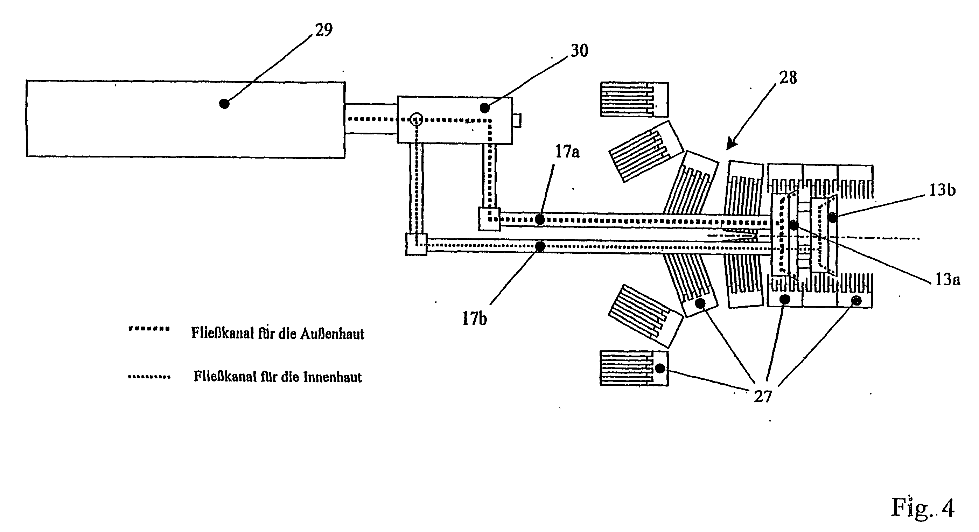

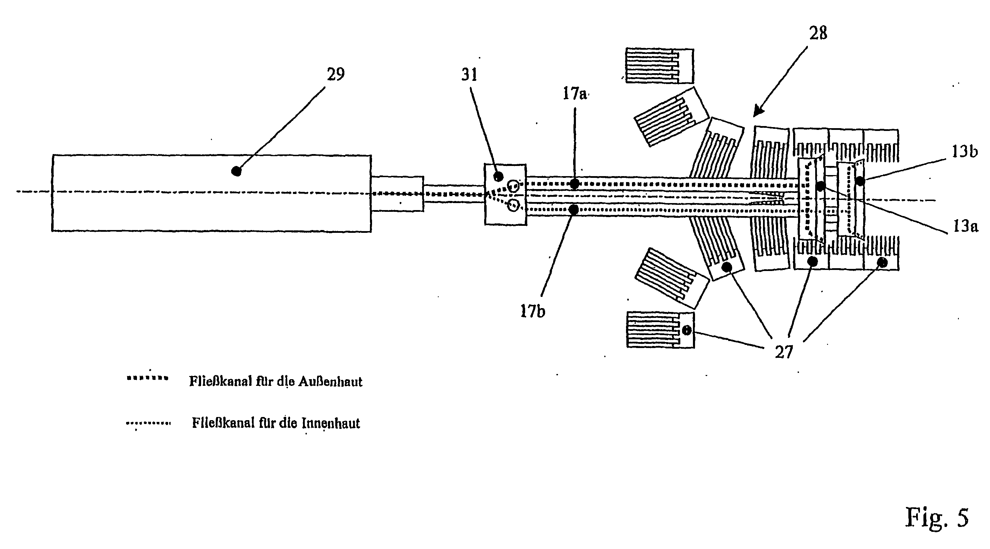

Bei den Ausführungsbeispielen der Fig. 4 und 5 werden zwar ebenfalls zweiwandige Wellrohre hergestellt. Allerdings sollen Innen- und Außenwand aus dem gleichen Material bestehen, weshalb nur ein Extruder 29 vorgesehen ist.

Der Unterschied zwischen den Ausführungsformen der Fig. 4 und 5 besteht nun im wesentlichen in der Art der Verteilung des aus dem Extruder 29 austretenden Kunststoff-Stromes in die beiden Zufuhrkanäle 17a und 17b.

Während bei der Ausführungsform der Fig. 4 eine konventionelle Verteilbox 30 vorgesehen ist, die über vergleichsweise lange Zufuhrkanäle 17a, 17b mit den Verteileinrichtungen 13a, 13b verbunden ist, erfolgt die Verteilung des aus dem Extruder 29 austretenden Kunststoff-Stromes bei dem Ausführungsbeispiel der Fig. 5 über einen Y-Verteiler 31, an den sich unmittelbar die Zufuhrkanäle 17a, 17b anschließen. Eine derartige Anordnung wäre bei konventioneller Technik nicht denkbar, weil es nicht möglich ist, mittels eines Y-Verteilers konzentrisch zueinander verlaufende rohrförmige Schmelze-Ströme zu erzeugen. Die Gestaltung gem. Fig. 5 stellt somit eine ganz erhebliche Vereinfachung gegenüber dem bisher Üblichen dar.

Wie sich aus vorstehender Beschreibung ergibt, liegen wegen der geringen Erstreckung der Verteileinrichtung in Fertigungsrichtung 2 während der Verteilung der Schmelze in radialer Richtung im Schmelze-Strom keine oder nur sehr geringe Geschwindigkeitsvektoren in Fertigungsrichtung vor, was sich günstig auf die entsprechende Vermischung und Schlauchbildung auswirkt. Es wäre sogar denkbar, die Verteilkanäle so anzuordnen und auszubilden, daß innerhalb der Verteilkanäle hinsichtlich der Fertigungsrichtung 2 negative Geschwindigkeitsvektoren vorliegen, d.h. die Schmelze entgegen der Herstellungsrichtung bewegt wird.

Infolge der geringen Baugröße, der Stabilität und der Variationsmöglichkeiten bietet somit die beschriebene Vorrichtung eine Vielzahl von Möglichkeiten, die Eigenschaften von mit der Vorrichtung erzeugten Rohren in Abhängigkeit von von dem eingesetzten Kunststoff zu beeinflussen.

## Patentansprüche

1. Vorrichtung zur Herstellung von nahtlosen Kunststoffrohren;
mit mindestens einer Extrusionseinrichtung;
mit mindestens einem der Extrusionseinrichtung in Produktionsrichtung nachgeschaltetem Spritzkopf mit mindestens einem, vorzugsweise kreisringförmigen, Ringspalt;
mit mindestens einem dem Spritzkopf in Produktionsrichtung nachgeschaltetem, beispielsweise von wandernden Korrugatorbacken gebildeten, vorzugsweise mit dem Ringspalt Koaxialen, Formhohlraum zur Ausformung des Kunststoffrohrs aus mindetens einem aus dem Ringspalt des Spritzkopfs austretendem Kunststoffschmelzestrom;
wobei vorgesehen ist:
daß der Spritzkopf eine vorzugsweise innerhalb des Querschnitts des Formhohlraums angeordnete vorzugsweise plattenförmige Verteileinrichtung aufweist, die eine Eintrittsöffnung aufweist, in die ein Zuführkanal der Kunststoffschmelze mündet;
wobei die Verteileinrichtung mehrere von der Eintrittsöffnung, vorzugsweise sternförmig, ausgehende, im wesentlichen senkrecht zur Achse des Formhohlraums und/oder des Ringspalts verlaufende Verteilkanäle aufweist,
wobei jeder Verteilkanal einen vorzugsweise geraden, radialen Kanalabschnitt, der von der Eintrittsstelle ausgeht, und vorzugsweise Zweigkanäle, die von einer Verzweigungsstelle am Ende des radialen Kanalabschnitts ausgehen, aufweist;
wobei die insgesamt n Enden der Verteilkanäle im Bereich des Umfangs der Verteileinrichtung in den Ringspalt mit jeweils gleichem Winkelabstand benachbarter Enden unter einem Winkel von 360°/n einmünden unter Ausbildung von n Fließwegen, die sich jeweils ausgehend von der Eintrittsöffnung in einander anschließenden Kanalabschnitten der Verteilkanäle zur Einmündung in den Ringspalt erstrecken und jeweils gleich großen Volumenstrom in den Ringspalt einleiten,
**dadurch gekennzeichnet,**
**daß** mindestens zwei der Fließwege unterschiedlich lang sind und zur Gewährleistung der Einleitung gleichen Volumenstroms in den Ringspalt (25, 4, 7) die Ausgestaltung der diesen beiden Fließwegen zugeordneten Kanalabschnitte (14z) hinsichtlich des Strömungsquerschnitts, insbesondere des Kanaldurchmessers unterschiedlich ausgebildet ist.

2. Vorrichtung nach Anspruch 1,
**dadurch gekennzeichnet,**
**daß** über die gesamte Länge eines Kanalabschnitts (14z) oder nur über einen Teilbereich der Länge eines Kanalabschnitts der Querschnitt verändert, insbesondere verengt oder erweitert ausgebildet ist,
wobei es sich bei dem Kanalabschnitt (14z, 14r) um einen Abschnitt des Verteilkanals (14) handelt, der sich von der Eintrittsöffnung (20) bis zu einer ersten Verzweigungsstelle (14v) oder bis zum Ringspalt (25, 4, 7) erstreckt oder von einer ersten Verzweigungsstelle (14v) bis zu einer zweiten Verzweigungsstelle erstreckt und/oder ein Abschnitt (14z, 14r) des Verteilkanals (14) ist, der mit konstanter Ausrichtung, z.B. geradlinig oder mit konstanter Krümmung verläuft.

3. Vorrichtung nach Anspruch 1 oder 2,
**dadurch gekennzeichnet,**
**daß** die Eintrittsöffnung (20) koaxial zur Achse (18) des Formhohlraums und/oder des Ringspalts (4, 7, 25) angeordnet ist oder daß die Eintrittsöffnung (20) mit Abstand zu dieser Achse (18) angeordnet ist.

4. Vorrichtung zur Herstellung von nahtlosen Kunststoffrohren,
nach einem der vorangehenden Ansprüche
**dadurch gekennzeichnet,**
**daß** die Eintrittsöffnung (20) in der Verteileinrichtung (13a, 13b) zentrisch und koaxial zum Ringspalt (4, 7, 25) und zum Formhohlraum angeordnet ist;
**daß** die Verteileinrichtung (13a, 13b) von der Eintrittsöffnung (20) sternförmig ausgehende, im wesentlichen senkrecht zur Achse des Formhohlraums bzw. des Ringspalts verlaufende Verteilkanäle (14) aufweist;
**daß** jeder Verteilkanal (14) einen geraden radial gerichteten ersten Kanalabschnitt (14r) gleicher Länge aufweist, der sich von der Eintrittsöffnung (20) bis zu einer Verzweigungsstelle (14v) erstreckt, wo er sich in mehrere Zweigkanalabschnitte (14z) verzweigt, welche die Kunststoffschmelze bogenförmigen Kanalabschnitten (14k) zuleiten, die im Bereich des Umfangs (24) der Verteileinrichtung (13a, 13b) jeweils in gleicher Winkelstellung zueinander in den Ringspalt (25) einmünden.

5. Vorrichtung nach einem der vorangehenden Ansprüche,
**dadurch gekennzeichnet,**
**daß** sich der radiale erste Kanalabschnitt (14r) an der Verzweigungsstelle (14v) in mehr als zwei Zweigkanalabschnitte (14z), vorzugsweise in drei Zweigkanalabschnitte (14z) verzweigt.

6. Vorrichtung nach einem der vorangehenden Ansprüche,
**dadurch gekennzeichnet,**
**daß** die Zweigkanalabschnitte (14z) symmetrisch zu der radialen Verlängerung des zugehörigen radialen ersten Kanalabschnitts (14r) angeordnet sind.

7. Vorrichtung nach einem der vorangehenden Ansprüche,
**dadurch gekennzeichnet,**
**daß** die in einer Verzweigungsstelle (14v) sich verzweigenden Zweigkanalabschnitte (14z) jeweils als gerade Kanalabschnitte (14a) ausgebildet sind.

8. Vorrichtung nach einem der vorangehenden Ansprüche,
**dadurch gekennzeichnet,**
**daß** der mittlere von aus einem radialen ersten Kanalabschnitt (14r) verzweigten Zweigkanalabschnitten (14z) mit dem radialen ersten Kanalabschnitt (14r) radial fluchtend angeordnet ist.

9. Vorrichtung nach einem der vorangehenden Ansprüche,
**dadurch gekennzeichnet,**
**daß** die Zweigkanalabschnitte (14z) sich ihrerseits einmal oder mehrmals wiederholt in noch weitere Zweigkanalabschnitte weiter verzweigen.

10. Vorrichtung nach einem der vorangehenden Ansprüche,
**dadurch gekennzeichnet,**
**daß** die Verzweigungsstellen (14r) bzw. die weiteren Verzweigungsstellen (14v) jeweils auf einem zur Eintrittsöffnung (20) und/oder zur Achse (18) des Ringspalts (4, 7, 25) und/oder des Formhohlraums konzentrischen Linie angeordnet sind.

11. Vorrichtung nach einem der vorangehenden Ansprüche,
**dadurch gekennzeichnet,**
**daß** die radialen ersten Kanalabschnitte (14r) mit jeweils gleichem Winkel zueinander angeordnet sind.

12. Vorrichtung nach einem der vorangehenden Ansprüche,
**dadurch gekennzeichnet,**
**daß** die ausgehend von dem radialen ersten Kanalabschnitt (14r) verzweigten Zweigkanalabschnitte (14z) mit jeweils gleichem Winkel zueinander angeordnet sind und/oder die ausgehend von dem Zweigkanalabschnitt (14z) verzweigten weiteren Zweigkanalabschnitte mit jeweils gleichem Winkel zueinander angeordnet sind.

13. Vorrichtung nach einem der vorangehenden Ansprüche,
**dadurch gekennzeichnet,**
**daß** jeweils vier radiale erste Kanalabschnitte (14r) mit einem Winkel von 90° zueinander angeordnet sind und daß ausgehend von jedem radialen ersten Kanalabschnitt (14r) verzweigte drei Zweigkanalabschnitte (14z) jeweils mit einem Winkel von 45° zueinander angeordnet sind.

14. Vorrichtung nach einem der vorangehenden Ansprüche,
**dadurch gekennzeichnet,**
**daß** die radialen ersten Kanalabschnitte (14r) jeweils gleichen Durchmesser aufweisen.

15. Vorrichtung nach einem der vorangehenden Ansprüche,
**dadurch gekennzeichnet,**
**daß** der Durchmesser der radialen ersten Kanalabschnitte (14r) jeweils kleiner ist als der Durchmesser der ausgehend von diesen verzweigten Zweigkanalabschnitten (14z).

16. Vorrichtung nach einem der vorangehenden Ansprüche,
**dadurch gekennzeichnet,**
**daß** mindestens zwei von mehreren aus einem radialen ersten Kanalabschnitt (14r) verzweigten Zweigkanalabschnitten (14z) unterschiedlich lang sind und/oder unterschiedlichen Durchmesser aufweisen und/oder daß mindestens zwei von ausgehend von einem Zweigkanal (14z) verzweigten weiteren Zweigkanalabschnitten unterschiedlich lang sind und/oder unterschiedliche Durchmesser aufweisen.

17. Vorrichtung nach Anspruch 16,
**dadurch gekennzeichnet,**
**daß** der Querschnitt, vorzugsweise der Durchmesser des kürzeren Zweigkanalabschnitts (14z) kleiner ist als der Querschnitt bzw. der Durchmesser des längeren Zweigkanalabschnitts (14z).

18. Vorrichtung nach Anspruch 16 oder 17,
**dadurch gekennzeichnet,**
**daß** zur Verbindung des kürzeren oder längeren Zweigkanalabschnitts (14z) mit einem oder mehreren daran anschließenden Kanalabschnitten (14k) ein den Fließweg verlängernder bzw. ein den Fließweg verkürzender Kanalabschnitt zur Kompensation unterschiedlicher Fließwege angeordnet ist.

19. Vorrichtung nach einem der vorangehenden Ansprüche,
**dadurch gekennzeichnet,**
**daß** die Verteileinrichtung (13a, 13b) eine Verteilplatte (15) aufweist, in der die radialen ersten Kanalabschnitte (14r) und/oder die Zweigkanalabschnitte (14z) als vorzugsweise parallel zur Plattenebene verlaufende Bohrungen (14r, 14z) ausgebildet sind.

20. Vorrichtung nach Anspruch 19,
**dadurch gekennzeichnet,**
**daß** die Verteileinrichtung (13a, 13b) eine erste Verteilplatte (15) und eine zweite Verteilplatte (16) aufweist, wobei in der zweiten Verteilplatte (16) Abschnitte der Verteilkanäle (14k), vorzugsweise die bogenförmigen Kanalabschnitte (14k), angeordnet sind.

21. Vorrichtung nach einem der Ansprüche 19 oder 20,
**dadurch gekennzeichnet,**
**daß** die Verteileinrichtung (13a, 13b) eine erste Verteilplatte (15) und eine auf dieser zumindest abschnittsweise aufliegende zweite Verteilplatte (16) aufweist und zumindest Abschnitte der Verteilkanäle (14k) als Nuten in mindestens einer der Platten (16) ausgebildet sind und die Nuten in dieser (16) Platte von jeweils der zumindest in diesem Bereich aufliegenden anderen Platte (15) unter Ausbildung der Verteilkanalabschnitte (14k) überdeckt werden.

22. Vorrichtung nach einem der Ansprüche 19 bis 21,
**dadurch gekennzeichnet,**
**daß** die bogenförmigen Kanalabschnitte (14k) in einer ringförmigen Verteilplatte (16) angeordnet sind und die Eintrittsöffnung (20) und vorzugsweise zumindest abschnittsweise die radialen ersten Kanalabschnitte (14r) in einer zentralen Verteilplatte (15) angeordnet sind, die von der ringförmigen Verteilplatte (16) umgeben angeordnet ist.

23. Vorrichtung nach Anspruch 22,
**dadurch gekennzeichnet,**
**daß** die zentrale Verteilplatte (15) und/oder die ringförmige Verteilplatte (16) eine konzentrische Abstufung aufweist bzw. aufweisen und die beiden Platten (15, 16) komplementär hinsichtlich der Abstufung aufliegend angeordnet sind.

24. Vorrichtung nach einem der vorangehenden Ansprüche,
**dadurch gekennzeichnet,**
**daß** die Verteileinrichtung (13a) außermittig einen Durchlaß (21) für einen Zufuhrkanal (17b) für Kunststoffschmelze einer in Produktionsrichtung nachgeschalteten Verteileinrichtung (13b) aufweist.

25. Vorrichtung nach einem der vorangehenden Ansprüche,
**dadurch gekennzeichnet,**
**daß** die Verteileinrichtung (13a, 13b) außermittig einen Durchlaß (22) für Versorgungseinrichtungen (22), z.B. Leitung für Luft, Strom, Kühlmittel aufweist.

## Claims

1. Apparatus for producing seamless plastic pipes;
with at least one extrusion device;
with at least one injection head connected downstream of the extrusion device in the production direction, with at least one annular gap which is preferably in the form of a circular ring;
with at least one mould cavity which is connected downstream of the injection head in the production direction and is formed for example by travelling corrugator jaws and is preferably coaxial with the annular gap, for shaping the plastic pipe from at least one flow of molten plastic material emerging from the annular gap of the injection head;
it being provided:
that the injection head has a preferably plate-shaped distribution device, which is preferably arranged within the cross-section of the mould cavity and has an intake opening into which a feed passage for the molten plastic material opens;
that the distribution device has a plurality of distribution passages which extend, preferably in a star shape, from the intake opening and run substantially perpendicularly to the axis of the mould cavity and/or the annular gap;
that each distribution passage has a preferably straight, radial passage portion, which extends from the intake location, and preferably branch passages, which extend from a branch location at the end of the radial passage portion;
that the total of n ends of the distribution passages open in the region of the periphery of the distribution device into the annular gap at a respectively identical angular spacing between adjacent ends at an angle of 360°/n, forming n flow paths which each extend from the intake opening in mutually adjoining passage portions of the distribution passages to open into the annular gap and introduce respectively equal volume flows into the annular gap,
**characterized**
**in that** at least two of the flow paths are of different lengths and, to ensure an equal volume flow is introduced into the annular gap (25, 4, 7), the configuration of the passage portions (14z) associated with these two flow paths is different in terms of the flow cross-section, in particular the passage diameter.

2. Apparatus according to Claim 1, **characterized in that** over the entire length of a passage portion (14z) or only over a portion of the length of a passage portion, the cross-section is altered, in particular reduced or enlarged,
the passage portion (14z, 14r) being a portion of the distribution passage (14) which extends from the intake opening (20) to a first branch location (14v) or to the annular gap (25, 4, 7) or extends from a first branch location (14v) to a second branch location and/or being a portion (14z, 14r) of the distribution passage (14) which extends with a constant orientation, for example in a straight line, or with a constant curvature.

3. Apparatus according to Claim 1 or 2, **characterized in that** the intake opening (20) is arranged coaxially with the axis (18) of the mould cavity and/or the annular gap (4, 7, 25) or **in that** the intake opening (20) is arranged at a spacing in relation to this axis (18).

4. Apparatus for producing seamless plastic pipes according to one of the preceding claims **characterized**
**in that** the intake opening (20) is arranged in the distribution device (13a, 13b) centrally and coaxially with respect to the annular gap (4, 7, 25) and the mould cavity;
**in that** the distribution device (13a, 13b) has distribution passages (14) which extend in a star shape from the intake opening (20) and run substantially perpendicularly to the axis of the mould cavity or the annular gap;
**in that** each distribution passage (14) has a straight, radially directed first passage portion (14r) of equal length, which extends from the intake opening (20) to a branch location (14v), where it branches into a plurality of branch passage portions (14z) which lead the molten plastic material to arcuate passage portions (14k) which, in the region of the periphery (24) of the distribution device (13a, 13b), respectively open into the annular gap (25) at equal angular positions relative to one another.

5. Apparatus according to one of the preceding claims, **characterized in that** the radial first passage portion (14r) branches at the branch location (14v) into more than two branch passage portions (14z), preferably into three branch passage portions (14z).

6. Apparatus according to one of the preceding claims, **characterized in that** the branch passage portions (14z) are arranged symmetrically in relation to the radial prolongation of the associated radial first passage portion (14r).

7. Apparatus according to one of the preceding claims, **characterized in that** the branch passage portions (14z) which branch at a branch location (14v) are respectively in the form of straight passage portions (14a).

8. Apparatus according to one of the preceding claims, **characterized in that** the middle one of branch passage portions (14z) which are branched from a radial first passage portion (14r) is arranged in radial alignment with the radial first passage portion (14r).

9. Apparatus according to one of the preceding claims, **characterized in that** the branch passage portions (14z) for their part further branch once or a plurality of times repeatedly into still further branch passage portions.

10. Apparatus according to one of the preceding claims, **characterized in that** the branch locations (14r) or the further branch locations (14v) are arranged respectively on a line which is concentric with respect to the intake opening (20) and/or the axis (18) of the annular gap (4, 7, 25) and/or the mould cavity.

11. Apparatus according to one of the preceding claims, **characterized in that** the radial first passage portions (14r) are arranged at a respectively identical angle in relation to one another.

12. Apparatus according to one of the preceding claims, **characterized in that** the branch passage portions (14z) which are branched from the radial first passage portion (14r) are arranged at a respectively identical angle in relation to one another and/or the further branch passage portions branched from the branch passage portion (14z) are arranged at a respectively identical angle in relation to one another.

13. Apparatus according to one of the preceding claims, **characterized in that** four respective radial first passage portions (14r) are arranged at an angle of 90° in relation to one another and that three branch passage portions (14z) branched from each radial first passage portion (14r) are respectively arranged at an angle of 45° in relation to one another.

14. Apparatus according to one of the preceding claims, **characterized in that** the radial first passage portions (14r) respectively have the same diameter.

15. Apparatus according to one of the preceding claims, **characterized in that** the diameter of the radial first passage portions (14r) is respectively smaller than the diameter of the branch passage portions (14z) which are branched from them.

16. Apparatus according to one of the preceding claims, **characterized in that** at least two of a plurality of branch passage portions (14z) which are branched from a radial first passage portion (14r) are of different lengths and/or have different diameters and/or at least two further branch passage portions which are branched from a branch passage (14z) are of different lengths and/or have different diameters.

17. Apparatus according to Claim 16, **characterized in that** the cross-section, preferably the diameter, of the shorter branch passage portion (14z) is smaller than the cross-section or the diameter of the longer branch passage portion (14z).

18. Apparatus according to Claim 16 or 17, **characterized in that**, to connect the shorter or longer branch passage portion (14z) to one or more passage portions (14k) adjoining it, a passage portion which increases the length of the flow path or a passage portion which reduces the length of the flow path is arranged to compensate for different flow paths.

19. Apparatus according to one of the preceding claims, **characterized in that** the distribution device (13a, 13b) has a distribution plate (15), in which the radial first passage portions (14r) and/or the branch passage portions (14z) are formed as bores (14r, 14z) preferably running parallel to the plane of the plate.

20. Apparatus according to Claim 19, **characterized in that** the distribution device (13a, 13b) has a first distribution plate (15) and a second distribution plate (16), portions of the distribution passages (14k), preferably the arcuate passage portions (14k), being arranged in the second distribution plate (16).

21. Apparatus according to either of Claims 19 and 20, **characterized in that** the distribution device (13a, 13b) has a first distribution plate (15) and a second distribution plate (16), which lies on the latter at least in a portion-wise manner, and at least portions of the distribution passages (14k) are in the form of grooves in at least one of the plates (16) and the grooves in this plate (16) are covered by the respective other plate (15) which rests on it at least in said region, forming the distribution passage portions (14k).

22. Apparatus according to one of Claims 19 to 21, **characterized in that** the arcuate passage portions (14k) are arranged in an annular distribution plate (16) and the intake opening (20) and preferably at least in a portion-wise manner the radial first passage portions (14r) are arranged in a central distribution plate (15), which is arranged such that it is surrounded by the annular distribution plate (16).

23. Apparatus according to Claim 22, **characterized in that** the central distribution plate (15) and/or the annular distribution plate (16) has or have a concentric stepping and the two plates (15, 16) are arranged to lie against each other in complementary relationship in respect of the stepping.

24. Apparatus according to one of the preceding claims, **characterized in that** the distribution device (13a) eccentrically has an aperture (21) for a feed passage (17b) for molten plastic material to a distribution device (13b) connected downstream in the production direction.

25. Apparatus according to one of the preceding claims, **characterized in that** the distribution device (13a, 13b) eccentrically has an aperture (22) for supply devices (22), for example a line for air, power or coolant.

## Revendications

1. Dispositif de fabrication de tubes en plastique sans soudure ;
avec au moins un système d'extrusion ;
avec au moins une tête d'injection, montée en aval du système d'extrusion dans le sens de la production, avec au moins un passage annulaire, de préférence circulaire ;
avec au moins une empreinte montée en aval de la tête d'injection dans le sens de la production, formée par exemple d'une coquille mobile pour machine à onduler, de préférence coaxiale par rapport au passage annulaire, pour le formage du tube en plastique, à partir d'au moins un flux de plastique fondu s'écoulant du passage annulaire de la tête d'injection ;
étant prévu:
que la tête d'injection comporte un système de distribution en forme de platine, agencé de préférence à l'intérieur de la section de l'empreinte, comprenant une ouverture d'admission débouchant dans un conduit d'alimentation du plastique fondu ;
sachant que le système de distribution comporte plusieurs conduits de distribution, partant de l'ouverture d'admission, de préférence en étoile, de manière sensiblement perpendiculaire à l'axe de l'empreinte et/ou du passage annulaire,
sachant que chaque conduit de distribution comporte un tronçon de conduit radial, de préférence droit, partant du point d'admission et de préférence des conduits de dérivation qui partent d'un point de dérivation à l'extrémité du tronçon de conduit radial ;
sachant que les au total n extrémités des conduits de distribution dans la zone périphérique du système de distribution débouchent dans le passage annulaire avec un angle de 360°/n, les extrémités voisines ayant toujours le même espacement angulaire, et forment n voies d'écoulement qui s'étendent chacune de l'ouverture d'admission des tronçons de conduit des conduits de distribution raccordés les uns dans les autres à l'entrée dans le passage annulaire et envoient toujours un débit volumique identique dans le passage annulaire,
**caractérisé en ce que**,
au moins deux des voies d'écoulement ont une longueur différente et que pour garantir l'envoi d'un débit volumique identique dans le passage annulaire (25, 4, 7), les tronçons de conduit (14z) affectés à ces deux voies d'écoulement doivent être conçus avec une section d'écoulement différente, en particulier un diamètre du conduit différent.

2. Dispositif selon la revendication 1
**caractérisé en ce que**,
sur la longueur totale d'un tronçon de conduit (14z) ou sur une partie seulement de la longueur d'un tronçon de conduit, la section peut varier et qu'elle est en particulier rétrécie ou élargie,
sachant que dans le cas du tronçon de conduit (14z, 14r), il s'agit d'un tronçon du conduit de distribution (14) s'étendant de l'ouverture d'admission (20) à un premier point de dérivation (14v) ou au passage annulaire (25, 4, 7) ou s'étendant d'un premier point de dérivation (14v) jusqu'à un deuxième point de dérivation et/ou qu'il s'agit d'un tronçon (14z, 14r) du conduit de distribution (14), disposé avec un alignement constant, par exemple en ligne droite ou avec une courbure constante.

3. Dispositif selon l'une quelconque des revendications 1 ou 2,
**caractérisé en ce que**,
l'ouverture d'admission (20) est dans un agencement coaxial par rapport à l'axe (18) de l'empreinte et/ou du passage annulaire (4, 7, 25) ou que l'ouverture d'admission (20) est agencée avec un écart par rapport à l'axe (18).

4. Dispositif de fabrication de tubes en plastique sans soudure, selon l'une quelconque des revendications précédentes
**caractérisé en ce que**,
l'ouverture d'admission (20) dans le système de distribution (13a, 13b) est agencée de manière centrée ou coaxiale par rapport au passage annulaire (4, 7, 25) et à l'empreinte ;
le système de distribution (13a, 13b) partant en étoile de l'ouverture d'admission (20) comporte des conduits de distribution (14) dans une disposition sensiblement perpendiculaire à l'axe de l'empreinte ou du passage annulaire ;
chaque conduit de distribution (14) comporte un premier tronçon de conduit droit, orienté radialement (14r), de longueur identique, s'étendant de l'ouverture d'admission (20) à un point de dérivation (14v), où il se ramifie en plusieurs tronçons de conduit de dérivation (14z) qui acheminent le plastique fondu dans des tronçons de conduit cintrés (14k) débouchant avec une position angulaire toujours identique entre eux, dans le passage annulaire (25), dans la zone périphérique (24) du système de distribution (13a, 13b).

5. Dispositif selon l'une quelconque des revendications précédentes,
**caractérisé en ce que**,
le premier tronçon de conduit radial (14r) se ramifie au point de dérivation (14v) en plus de deux tronçons de conduit de dérivation (14z), de préférence en trois tronçons de conduit de dérivation (14z).

6. Dispositif selon l'une quelconque des revendications précédentes,
**caractérisé en ce que**,
les tronçons de conduit de dérivation (14z) sont disposés symétriquement par rapport au prolongement radial du premier tronçon de conduit radial (14r) correspondant.

7. Dispositif selon l'une quelconque des revendications précédentes,
**caractérisé en ce que**,
les tronçons de conduit de dérivation (14z) se ramifiant à un point de dérivation (14v) sont conçus sous forme de tronçons de conduit droits (14a).

8. Dispositif selon l'une quelconque des revendications précédentes,
**caractérisé en ce que**,
le tronçon de conduit central parmi les tronçons de conduit de dérivation (14z) ramifiés à partir d'un premier tronçon de conduit radial (14r) est aligné radialement avec le premier tronçon de conduit radial (14r).

9. Dispositif selon l'une quelconque des revendications précédentes,
**caractérisé en ce que**,
les tronçons de conduit de dérivation (14z) continuent de se ramifier à leur tour, une ou plusieurs fois, en d'autres tronçons de conduit de dérivation.

10. Dispositif selon l'une quelconque des revendications précédentes,
**caractérisé en ce que**,
les points de dérivation (14r) ou les autres points de dérivation (14v) sont toujours agencés sur une ligne concentrique par rapport à l'ouverture d'admission (20) et/ou à l'axe (18) du passage annulaire (4, 7, 25) et/ou de l'empreinte.

11. Dispositif selon l'une quelconque des revendications précédentes,
**caractérisé en ce que**,
les premiers tronçons de conduit radiaux (14r) sont agencés entre eux avec le même angle.

12. Dispositif selon l'une quelconque des revendications précédentes,
**caractérisé en ce que**,
les tronçons de conduit de dérivation ramifiés (14z) partant du premier tronçon de conduit radial (14r) sont agencés entre eux avec le même angle et/ou que les autres tronçons de conduit de dérivation ramifiés à partir du tronçon de conduit de dérivation (14z) sont agencés entre eux toujours avec le même angle.

13. Dispositif selon l'une quelconque des revendications précédentes,
**caractérisé en ce que**,
chaque fois quatre premiers tronçons de conduit radiaux (14r) sont agencés entre eux avec un angle de 90° et que trois tronçons de conduit de dérivation ramifiés (14z) à partir de chaque premier tronçon de conduit radial (14r) sont agencés entre eux avec un angle de 45°.

14. Dispositif selon l'une quelconque des revendications précédentes,
**caractérisé en ce que**,
les premiers tronçons de conduit radiaux (14r) comportent toujours un diamètre identique.

15. Dispositif selon l'une quelconque des revendications précédentes,
**caractérisé en ce que**,
le diamètre des premiers tronçons de conduit radiaux (14r) est toujours inférieur au diamètre des tronçons de conduit de dérivation (14z) partant de ceux-ci.

16. Dispositif selon l'une quelconque des revendications précédentes,
**caractérisé en ce que**,
au moins deux de plusieurs tronçons de conduit de dérivation ramifiés (14z) à partir d'un premier tronçon de conduit radial (14r) ont des longueurs différentes et/ou des diamètres différents et/ou que au moins deux des autres tronçons de conduit de dérivation ramifiés à partir d'un conduit de dérivation (14z) ont des longueurs différentes et/ou comportent un diamètre différent.

17. Dispositif selon la revendication 16,
**caractérisé en ce que**,
la section, de préférence le diamètre du tronçon de conduit de dérivation le plus court (14z) est plus petit que la section ou le diamètre du tronçon de conduit de dérivation plus long (14z).

18. Dispositif selon l'une quelconque des revendications 16 ou 17,
**caractérisé en ce que**,
pour raccorder le tronçon de conduit de dérivation plus court ou plus long (14z) à un ou plusieurs tronçons de conduit s'y rattachant (14k), est agencé un tronçon de conduit rallongeant ou raccourcissant la voie d'écoulement, pour compenser les différences des voies d'écoulement.

19. Dispositif selon l'une quelconque des revendications précédentes,
**caractérisé en ce que**,
le système de distribution (13a, 13b) comporte une platine de distribution (15) dans laquelle, les premiers tronçons de conduit radiaux (14r) et/ou les tronçons de conduit de dérivation (14z) sont conçus sous forme d'orifices disposés de préférence parallèlement au plan de la platine

20. Dispositif selon la revendication 19,
**caractérisé en ce que**,
le système de distribution (13a, 13b) comporte une première platine de distribution (15) et une deuxième platine de distribution (16), dans la deuxième platine de distribution (16) étant agencés des tronçons de conduit (14k), de préférence des tronçons de conduit cintrés (14k).

21. Dispositif selon l'une quelconque des revendications 19 ou 20,
**caractérisé en ce que**,
le système de distribution (13a, 13b) comporte une première platine de distribution (15) et une deuxième platine de distribution (16), s'appuyant au moins par tronçon sur elle et qu'au moins des tronçons de conduits de distribution (14k) sont conçus sous forme de rainures dans au moins l'une des platines (16) et que les rainures dans cette platine (16) sont recouvertes par au moins une autre platine (15) appuyée dans cette zone, en formant des tronçons de conduit de distribution (14k).

22. Dispositif selon l'une quelconque des revendications 19 à 21,
**caractérisé en ce que**,
les tronçons de conduit cintrés (14k) sont agencés dans une platine de distribution annulaire (16) et que l'ouverture d'admission (20) et les premiers tronçons de conduit radiaux (14r), de préférence au moins par tronçon, sont agencés dans une platine de distribution centrale (15) entourée par la platine de distribution annulaire (16).

23. Dispositif selon la revendication 22,
**caractérisé en ce que**,
la platine de distribution centrale (15) et/ou la platine de distribution annulaire (16) comporte ou comportent un étagement en gradins concentriques et que les deux platines (15, 16) sont agencées en appui, de manière complémentaire par rapport à l'étagement en gradins.

24. Dispositif selon l'une quelconque des revendications précédentes,
**caractérisé en ce que**,
le système de distribution (13a) comporte un passage (21) excentré pour un conduit d'alimentation (17b) pour le plastique fondu d'un système de distribution (13b) monté en aval dans le sens de la production.

25. Dispositif selon l'une quelconque des revendications précédentes,
**caractérisé en ce que**,
le système de distribution (13a, 13b) comporte un passage (22) excentré pour les systèmes d'alimentation (22), tels que canalisation d'air, de courant, réfrigérant.
